# EUROPÄISCHE PATENTANMELDUNG

(11) **EP 4 368 536 A1**
(43) Veröffentlichungstag der Anmeldung: **15.05.2024**
(21) Anmeldenummer: 22207237.3
(22) Anmeldetag: 14.11.2022
(51) Int. Cl.: B65D 85/804

(54) **PORTIONENKAPSEL**

(71) Anmelder: Tchibo GmbH, 22297 Hamburg (DE)
(72) Erfinder: WICHE, Marius-Konstantin, 22763 Hamburg (DE)
(74) Vertreter: Frei Patent Attorneys

(57) **Zusammenfassung**

Eine mit einem Extraktionsgut gefüllte Portionenkapsel (1) für die Herstellung eines Brüherzeugnisses weist einen Grundkörper sowie einen daran befestigten Deckel (3) aus Kunststoff auf. Grundkörper und Deckel bilden zusammen eine das Extraktionsgut umschliessende Kapsel. Der Deckel weist einen Deckel-Kragen (42) auf, dessen Innenseite am Grundkörper befestigt ist. Die Deckel hat einen im Wesentlichen rechteckigen, insbesondere quadratischen Grundriss. Eine endseitige, flache Deckelfläche (31) des Deckels ist gegenüber der vom Deckel-Kragen definierten Ebene nach axial-aussen versetzt. Gemäss einem Aspekt der vorliegenden Erfindung weist der Deckel eine Versteifungsstruktur mit mindestens einer nach innen ragenden Verstärkungsrippe (46) auf. Dabei ist die Verstärkungsstruktur so ausgebildet, dass die beiden Deckelflächen-Diagonalen durch sie überspannt werden.

## Beschreibung

Die Erfindung betrifft die Zubereitung von Getränken oder dergleichen aus einem in einer Kapsel enthaltenen Extraktionsgut, beispielsweise gemahlenem Kaffee. Sie betrifft insbesondere eine Portionenkapsel.

Extraktionsgeräte zum Zubereiten von Getränken aus einem in einer Portionsverpackung vorhandenen Extraktionsgut sind beispielsweise als Kaffee-, Espresso- oder auch Teemaschinen bekannt. In vielen entsprechenden Systemen sind die Portionsverpackungen als Kapseln ausgebildet, in denen das Extraktionsgut bspw. luftdicht abgeschlossen ist. Für die Extraktion wird die Kapsel an zwei einander gegenüberliegenden Seiten angestochen. Auf der ersten Seite wird eine Brühflüssigkeit - im Allgemeinen heisses Wasser - eingeleitet. Auf der zweiten Seite wird das Brüherzeugnis aus der Kapsel ausgeleitet. Je nach zuzubereitendem Getränk und System muss dabei im Innern der Kapsel ein recht erheblicher Druck herrschen.

Aus der WO 2010/118543 und der WO 2015/096989 sind Kaffee-Portionenkapseln bekannt, welche näherungsweise eine Würfelform aufweisen, aus Kunststoff gefertigt sind, und im Unterschied zu den bekannten becherförmigen Kapseln keinen auf der Ebene der einen (oberseitigen) Deckfläche umlaufenden Kragen aufweisen. Ein solcher umlaufender Kragen wird bei Kapselsystemen gemäss dem Stand der Technik unter anderem zum Verschliessen der Kapsel durch einen eine als Deckel dienende Folie benötigt. Im Gegensatz dazu wird gemäss WO 2010/118543 und WO 2015/096989 ein gewölbter Deckel verwendet. Die gemäss der Lehre der WO 2010/118543 hergestellte Kapsel hat demnach eine zwischen den durch die Deckfläche definierten Ebenen umlaufende, einen Kragen bildende Schweissbraue, deren Ausdehnung/seitliches Vorstehen jedoch im Vergleich zum Kragen bekannter Kapseln deutlich reduziert ist. Für das Verschweissen wird ein Energierichtungsgeber benötigt, welcher durch eine umlaufende Rippe gebildet wird und welcher am Becher (gemäss WO 2010/118543) oder am Deckel (gemäss WO 2015/096989) vorhanden sein kann.

Als Kapselmaterialien sind insbesondere Aluminium und Kunststoffe, bspw. Polypropylen bekannt geworden. Auch sogenannte Bio-Kunststoffe sind schon als Kapselmaterialien diskutiert worden. Als solche werden einerseits Kunststoffe bezeichnet, die aus einem nachwachsenden Rohstoff gefertigt sind (sogenannte biobasierte Kunststoffe). Anderseits sind Bio-Kunststoffe Kunststoffe, die biologisch abbaubar sind (sogenannt bioabbaubare Kunststoffe). Die für die Herstellung von Portionenkapseln vorgeschlagenen Kunststoffe sind bioabbaubar und beinhalten teilweise einen Anteil von biobasierten Kunststoffen.

Im vorliegenden Text bedeutet "bioabbaubar" biologisch abbaubar gemäss der Norm EN13432 (Stand: Ende 2020), und "biobasiert" bedeutet "aus nachwachsenden Rohstoffen, nicht auf fossiler Basis gefertigt".

Kunststoffkapseln der in WO 2010/118543 und in WO 2015/096989 beschriebenen Art haben sich bewährt. Ihre Herstellung ist jedoch mit einem gewissen Aufwand verbunden. Bei der Herstellung fällt unter anderem das Befestigen des Deckels am mit Extraktionsgut gefüllten Grundkörper, insbesondere mittels Ultraschallschweissen, ins Gewicht. Da der Deckel ein dimensionsstabiler dreidimensionaler Körper ist und nicht bloss eine Folie, muss er zunächst in einem formgebenden Verfahren hergestellt und anschliessend für das Befestigen relativ zum Grundkörper präzise positioniert werden. Das bedingt unter anderem, dass die Deckel einzeln in die Schweissanlage aufgenommen werden, was einen recht grossen zeitlichen Aufwand mit sich bringt und sich verteuernd auf die Herstellungskosten der ganzen Kapsel auswirkt.

Es ist eine Aufgabe der vorliegenden Erfindung, hier Abhilfe zu schaffen.

Diese Aufgabe wird gelöst durch die Erfindung, wie sie in den Patentansprüchen definiert ist.

Eine mit einem Extraktionsgut gefüllte Portionenkapsel für die Herstellung eines Brüherzeugnisses weist in an sich bekannter Art einen Grundkörper, im Allgemeinen aus Kunststoff, sowie einen daran befestigten Deckel aus Kunststoff auf. Grundkörper und Deckel bilden zusammen eine das Extraktionsgut umschliessende Kapsel. Der Grundkörper bildet einen Bodenbereich, umlaufende Seitenwand und einem zu einer Deckelseite hin an die umlaufende Seitenwand anschliessenden umlaufenden Grundkörper-Kragen. Der Deckel weist einen Deckel-Kragen auf, dessen Innenseite am Grundkörper-Kragen befestigt, bspw. mit ihm verschweisst ist. Die Kapsel hat einen im Wesentlichen rechteckigen, insbesondere quadratischen Grundriss, indem sowohl der Grundkörper als auch der Deckel mindestens im Bereich des Kragens einen im Wesentlichen rechteckigen, insbesondere quadratischen Grundriss aufweisen.

Die Kapsel als Ganze kann insbesondere näherungsweise würfelförmig sein.

Der Deckel ist nicht flach, sondern nach aussen (in Bezug auf ein Kapselinneres), also nach axial-aussen gewölbt, d.h. eine (axial) endseitige, flache Deckelfläche ist gegenüber der vom Kragen definierten Ebene nach axial-aussen versetzt. Der Deckel unterscheidet sich also von einem flachen, bspw. folien- oder plattenartigen Deckelelement. Er ist ein dreidimensional geformter Körper. Anders ausgedrückt bildet der Deckel eine Wölbung, so dass der zum Kapselvolumen beiträgt, indem die Deckelfläche zum Deckel-Kragen versetzt ist.

Gemäss einem Aspekt der vorliegenden Erfindung weist der Deckel eine Versteifungsstruktur mit mindestens einer nach innen ragenden Verstärkungsrippe auf. Dabei ist die Verstärkungsstruktur so ausgebildet, dass die beiden Deckelflächen-Diagonalen durch sie überspannt werden.

### «Nach innen ragend» bedeutet hier «in Richtung zum Kapselinneren hin ragend».

Dass die Diagonalen «überspannt» werden, bedeutet, dass die mindestens eine Verstärkungsrippe durch die Diagonalen durchgeht, d.h. von einer Seite der Diagonalen zur anderen Seite der Diagonalen führt, und zwar nicht bloss dem Rand der Deckelfläche entlang, sondern in einem signifikanten Abstand (bspw. mindestens 5% der Länge der Diagonalen, oder auch mindestens 10%) zu den Ecken - bei einer Länge der Diagonalen durch die Deckelfläche von 30-40 mm können bspw. die Diagonalen an mindestens zwei Stellen in je einem Abstand von mindestens 3 mm von der Ecke, und/oder in der Mitte der Diagonalen überspannt werden. Wenn die Ecken abgerundet oder abgeschrägt sind, misst sich dieser Abstand jeweils vom effektiven, realen Rand der Deckelfläche her und nicht von der Ecke im mathematischen Sinn.

Es hat sich gezeigt, dass eine solche Verstärkungsstruktur vorteilhaft ist in Bezug auf die industrielle Fertigung der Kapseln. Durch eine solche Verstärkungsstruktur wird verhindert, dass die Deckel beim Transport zur Anlage, in welcher die Kapseln aus den Deckeln, den Grundkörpern und dem Extraktionsgut gefertigt werden, verbogen werden. Die Erkenntnis ist, dass erstens Verformungen von Kapseldeckeln mit der hier beschriebenen Form mit rechteckigem Grundriss und gegenüber dem Kragen versetzter Deckelfläche primär als Verformungen längs zu einer Diagonale entstehen. Diese können durch die Verstärkungsstruktur, welche die beiden Diagonalen überspannt, verhindert werden. Über die Seitenlängen ist hingegen konstruktionsbedingt eine ausreichende Biegesteifigkeit vorhanden. Zweitens ist die Erkenntnis, dass es solche Verformungen sind, welche ein Hindernis für eine rationelle industrielle Fertigung darstellen: sie verhindern, dass eine Vielzahl von Deckeln als Bündel in die Schweissanlage eingesetzt werden kann.

Die Form des Deckels wird im Allgemeinen von radial-aussen nach radial-innen den Deckel-Kragen, einen bspw. gekrümmten Übergangsbereich und die Deckelfläche als mittigen flachen Bereich aufweisen. Der Übergangsbereich definiert den Versatz zwischen den axialen Positionen des Kragens und der Deckelfläche, d.h. er verläuft bspw. näherungsweise 'vertikal' (wenn die Horizontale durch die Deckelfläche definiert ist), jedenfalls nicht senkrecht zu axialen Richtungen.

«Flach» bezieht sich hier auf die äussere Oberfläche - die Verstärkungsstruktur und ggf. weitere nach innen ragenden Strukturen stellen Abweichungen von der flachen Form dar. Ebenfalls möglich sind an der flachen Deckelfläche aussenseitig angebrachte reliefartige Beschriftungen oder dergleichen.

Der Übergangsbereich kann bspw. S-förmig gekrümmt sein oder stetig von einer in einem Winkel zur Kragenebene stehenden äusseren Partie hin zur mittigen flachen Deckelfläche gekrümmt verlaufen. Dabei ist die Dimensionierung beispielsweise so gewählt, dass der mittige flache Bereich (die Deckelfläche) optisch dominiert, indem er bspw. gleich gross wie oder nur unwesentlich (bspw. maximal 10%) kleiner als die Bodenfläche der Kapsel ist. Es kann insbesondere vorgesehen sein, dass dieser flache Bereich mehr als 60% des Durchmessers und entsprechend mindestens 40% der Fläche, einnimmt.

Die Form der Verstärkungsstruktur kann insbesondere an die Geometrie der Anstechvorrichtung angepasst sein, durch welche die Kapsel beim Extraktionsprozess deckelseitig gezielt perforiert wird. Die Verstärkungsrippe(n) kann/können insbesondere dort vorhanden sein, wo kein Anstechdorn den Deckel perforiert.

Die Verstärkungsrippen können insbesondere am Übergangsbereich befestigt sein und/oder eine ganz umlaufende Struktur bilden, beispielsweise einen Ring um ein Zentrum herum, oder auch ein Polygon um das Zentrum herum. Im ersten Fall (Befestigung am Übergangsbereich) werden die Verstärkungsrippen gegen den konstruktionsgemäss steifen Rand des Kapseldeckels abgestützt. Im zweiten Fall bilden sie eine in sich steife Struktur.

Beispiele für Verstärkungsstrukturen sind ein Paar von diagonal zwischen den Ecken verlaufenden Verstärkungsrippen (die beiden Diagonalen werden vom jeweils entlang der anderen Diagonale verlaufenden Verstärkungsrippe überspannt), ein Paar von mittig parallel zu den Seiten verlaufenden Verstärkungsrippen (die Diagonalen werden je von beiden Verstärkungsrippen überspannt), oder Verstärkungsrippen welche die Diagonalen entlang der Ecken überspannen und je an beiden ihrer Enden mit dem Übergangsbereich verbunden sind. Ein weiteres Beispiel ist eine ringförmige Verstärkungsrippe. Kombinationen dieser Konzepte sind ohne Weiteres möglich.

Der Deckel kann insbesondere durch Spritzgiessen hergestellt sein, was auch für den Grundkörper gilt. Ein Herstellungsverfahren für die Kapsel kann demnach folgende Schritte umfassen: Herstellung des Grundkörpers durch ein formgebendes Verfahren (als formgebendes Verfahren werden hier sowohl Urform-Verfahren wie Spritzgiessen als auch Umform-Verfahren wie Tiefziehen aufgefasst); Herstellung des Deckels mittels Spritzgiessen, wobei die Giessform so ausgestaltet ist, dass sich nebst dem Deckel-Kragen, dem Übergangsbereich und der Deckelfläche auch die Verstärkungsstruktur und beispielsweise ein Energierichtungsgeber ergibt; Befüllen des Grundkörpers mit dem Extraktionsgut, bspw. gemahlenem Kaffee; Befestigung des Deckels am Grundkörper, so dass der Deckel-Kragen mit den Grundkörper-Kragen verbunden wird, beispielsweise mittels Ultraschallschweissen; optional Abtrennen eines äusseren Teils des Kragens, der sich nach der Verbindung aus dem Grundkörper-Kragen und dem Deckel-Kragen ergibt.

«Radial» und «axial» bezieht sich in diesem Text immer auf die Achse der Kapsel, welche mittig durch die Kapsel und senkrecht zur vom Kragen definierten Ebene (und i.A. auch zur Ebene des Kapselbodens und der Deckelfläche) verläuft. Diese Achse hängt auch mit der Funktion der Kapsel zusammen: Bei der Brühung fliesst die Flüssigkeit axial, d.h. vom Kapselboden zum Kapseldeckel hin (oder umgekehrt). «Radiale» Richtungen sind senkrecht zur Achse der Kapsel. «Radial» impliziert also nicht einen runden Kapselgrundriss.

In Ausführungsformen können Grundkörper und/oder Deckel bspw. als Mehrschichtsystem mit Biokunststoff (bspw. Ecovio)/PVOH/Biokunststoffvorliegen, wobei PVOH die Diffusionssperrschicht bildet. Insbesondere für tiefziehbare Schichtsysteme kann zwischen die PVOH-Schicht und den Biokunststoff auch eine sogenannte tie-Schicht, d.h. eine Haftschicht angeordnet sein, so dass der Aufbau dann Biokunststoff/tie/PVOH/tie/Biokunststoff sein kann. Bioabbaubare tie-Schichten sind inzwischen bekannt und am Markt erhältlich, bspw. als natürliche Wachse.

Als Alternative zur Ausgestaltung aus Biokunststoff können Grundkörper und Deckel auch aus einem anderen Kunststoff - bspw. mit Diffusionssperrschicht - gestaltet sein, bspw. aus Polypropylen.

Das Kunststoffmaterial des Deckels und dasjenige des Grundkörpers können identisch sein. Es ist aber auch möglich, dass der Deckel aus einem Kunststoff anderer Zusammensetzung besteht, der jedoch mit den Grundkörper-Kunststoff verschweissbar ist.

Eine Wandstärke im Bereich des Grundkörpers beträgt insbesondere zwischen 0.2 mm und 0.5 mm, bspw. zwischen 0.25 mm und 0.45 mm. Die Wandstärke des Deckels kann zwischen 0.25 mm und 0.55 mm, beispielsweise zwischen 0.35 mm und 0.45 mm betragen. In einer Ausführungsform entspricht die Wandstärke des Deckels ungefähr der Wandstärke des Grundkörpers.

Die Kapsel kann - das gilt für alle Ausführungsformen, auch des ersten Aspekts - insbesondere so ausgebildet sein, dass der Grundkörper und der Deckel zusammen das Extraktionsgut vollständig umschliessen, ohne bspw. durch eine Folie oder dergleichen abgedeckte Öffnung. Sie kann insbesondere hermetisch und sauerstoffdicht sein, bspw. indem sie eine geeignete Diffusionsbarriere aufweist.

Ausführungsbeispiele der Erfindung werden nachfolgend anhand von Zeichnungen beschrieben. In den Zeichnungen bezeichnen gleiche Bezugszeichen gleiche oder analoge Elemente. Die Zeichnungen sind nicht massstäblich und zeigen teilweise einander entsprechende Elemente in von Figur zu Figur unterschiedlichen Grössen. Es zeigen:
- Fig. 1 eine Kapsel;
- Fig. 2 einen Grundkörper für die Herstellung einer Kapsel gemäss Fig. 1;
- Fig. 3 einen Deckel gemäss dem Stand der Technik, angeschnitten gezeichnet;
- Fig. 4 eine Ansicht einer erfindungsgemässen Kapsel; and
- Fig. 5 einen nur ausschnittweise, im Bereich der Verschweissung dargestellten Schnitt durch die Kapsel.

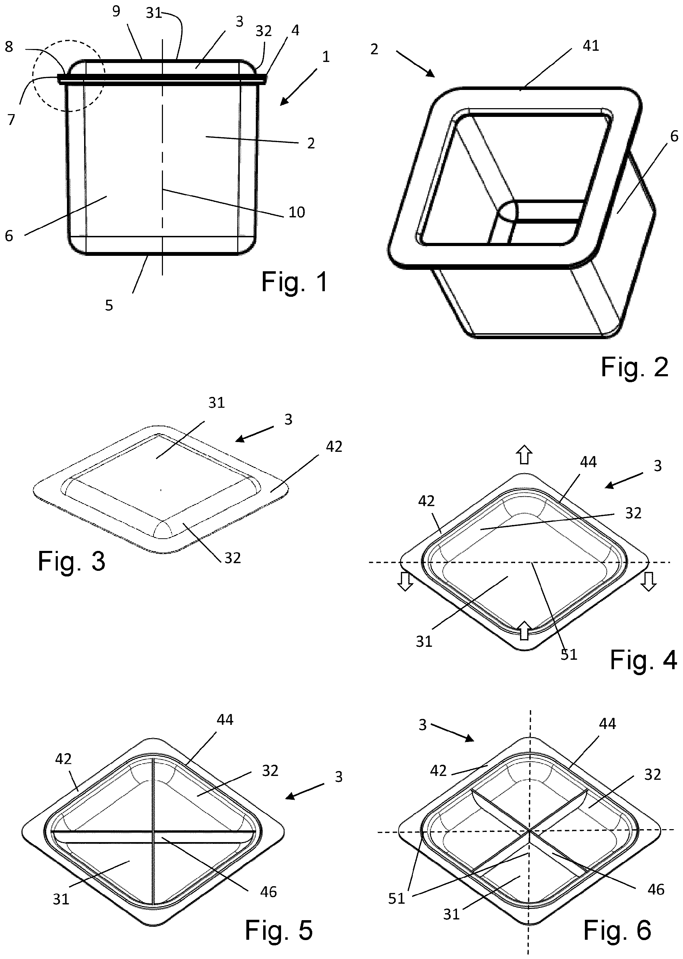

Die Kapsel 1 gemäss **Figur 1** hat im Wesentlichen die Form eines Würfels mit gerundeten Kanten. Die Ausdehnung nimmt jedoch zur oben liegenden Seite hin leicht zu, so dass die Kapsel streng mathematisch gesehen eine Pyramidenstumpfform hat. Der Neigungswinkel der in der Figur seitlichen Flächen gegenüber der Senkrechten zur Grundfläche 5 - gemeint ist natürlich diejenige zur Grundfläche senkrechte Ebene, die durch die Kante zwischen der Grundfläche und der entsprechenden seitlichen Fläche verläuft - ist sehr klein, er beträgt vorzugsweise höchstens 2° zum Beispiel nur ca. 1°. Ausserdem entspricht die Höhe der Kapsel über der Grundfläche näherungsweise der Länge der Grundflächenkanten.

Die Kapsel weist einen Grundkörper (oder Becher) 2 und einen entlang eines umlaufenden Kragens 4 daran befestigten Deckel 3 auf. Der Grundkörper bildet einen Kapselboden 5 und eine umlaufende Seitenwand 6, welche an ihrem in Bezug auf axiale Richtungen (Achse 10) äusseren, in der Figur oberen, Ende durch den Kragen 4 abgeschlossen wird. Der Deckel ist nach aussen gewölbt, indem die zum Kapselboden 5 im Wesentlichen parallele Deckelfläche 9 im Vergleich zum umlaufenden Kragen 4 nach aussen (und axial-'vertikal'), also on Fig. 1 nach oben, versetzt ist.

**Figur 2** zeigt den Grundkörper 2 (Becher) vor der Befüllung und vor dem Verschliessen. Der Grundkörper-Kragen 41 weist eine Ausdehnung auf, welche grösser sein kann als diejenige des Kragens 4 der fertigen Kapsel.

**Figur 3** zeigt einen Deckel 3, der - wie auch der Grundkörper 2 - beispielsweise durch Spritzgiessen hergestellt ist. Der Deckel weist in einem zentralen Bereich eine Deckelfläche 31, einen eine Wölbung bildenden Übergangsbereich 32 sowie einen Deckel-Kragen 42 auf.

Kapseln der in Figur 1 gezeichneten Art, Grundkörper 2 in der in Figur 2 gezeichneten Art und Deckel 3 der in Fig. 3 dargestellten Art sind auch schon aus dem Stand der Technik bekannt, beispielsweise aus der WO 2015/096990.

Bei der Kapselherstellung wird zunächst der Grundkörper 2 mit dem Extraktionsgut befüllt, und anschliessend wird der Deckel 3 positioniert. Daraufhin findet ein Ultraschallschweissen statt. Je nach anfänglicher Ausdehnung des Grundkörper-Kragens und des Deckel-Kragens findet anschliessend an das Verschweissen optional noch ein Abtrennen einer überstehenden Kragenpartie statt.

**Figur 4** zeigt eine Deckel 3 der in Figuren 1 und 3 dargestellten Art von der Innenseite her. Der Deckel gemäss Fig. 4 ist nicht erfindungsgemäss ausgestaltet und weist keine Verstärkungsstruktur auf. Es hat sich gezeigt, dass ein solcher Deckel beim Transport gebogen werden kann, wobei eine Biegung in der Regel entlang einer der beiden Diagonalen erfolgt (in Fig. 4 ist eine Diagonale 51 eingezeichnet; die Biegung längs dieser Diagonale 51 wird durch Blockpfeile angedeutet), während Biegungen mit Biegungsachsen parallel zu den Seiten durch die Steifigkeit verhindert werden, welche dadurch bewirkt wird, dass der des Übergangsbereich 32 eine Wölbung bildet, also aus der Ebene der Deckelfläche 31 weg gekrümmt ist.

**Figur 5** zeigt einen Deckel 3 mit Verstärkungsstruktur. Diese Verstärkungsstruktur wird durch zwei Verstärkungsrippen 46 gebildet, welche je diagonal verlaufen, und welche in der Mitte des Kapseldeckels miteinander verbunden sind. Die beiden Diagonalen werden also durch die entlang der jeweils anderen Diagonale verlaufende Verstärkungsrippe überspannt. Die Verstärkungsrippen sind auch mit dem Übergangsbereich 32 verbunden, so dass sich insgesamt eine besonders stabile Struktur ergibt.

Die Höhe der Rippen (also die Ausdehnung in axialer Richtung) entspricht in der dargestellten Ausführungsform der Höhe der Wölbung des Deckels. Das ist aber keine Notwendigkeit. Es ist auch möglich, die Rippen weniger hoch oder auch höher auszugestalten; im letzteren Fall können die Rippen noch zusätzlich zur Versteifung eine bei Herstellungsverfahren der Kapsel zentrierende Wirkung haben.

In der Variante gemäss **Figur 6** sind ebenfalls zwei gekreuzt angeordnete Verstärkungsrippen 46 vorhanden. Die Verstärkungsrippen 46 verlaufen ebenfalls bis zum Übergangsbereich 32 und sind mit ihm verbunden. Im Unterschied zur Ausführungsform von Fig. 5 sind die Verstärkungsrippen jedoch parallel zu den Seiten und nicht diagonal. In Fig. 6 sind auch die von den Verstärkungsrippen 46 überspannten Diagonalen 51 schematisch eingezeichnet.

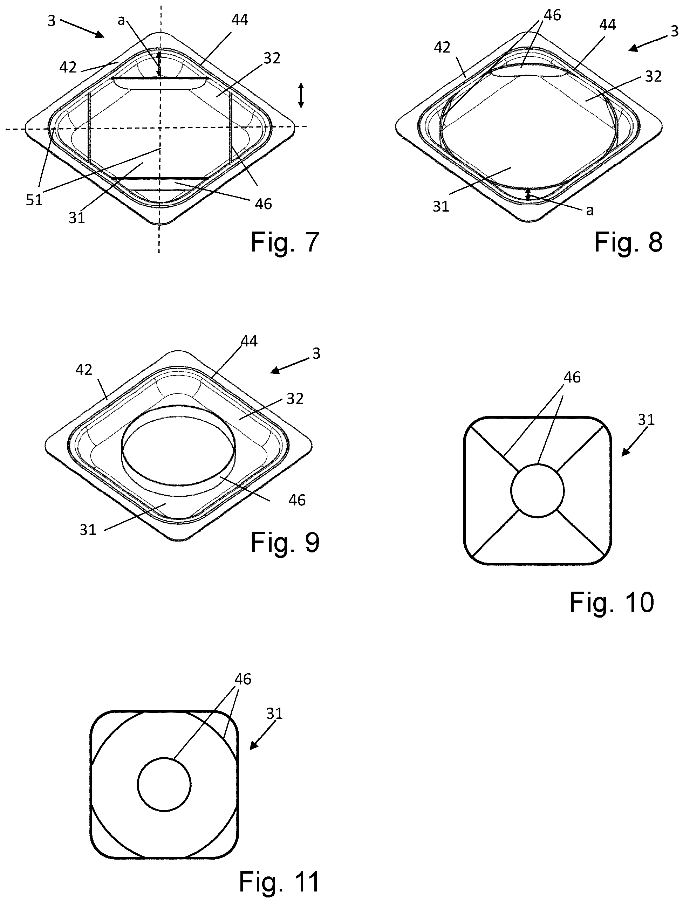

**Figur 7** zeigt eine Ausführungsform mit vier Verstärkungsrippen 46, die jeweils die zwei an einer (gerundeten) Ecke zusammenlaufenden, durch den Übergangsbereich gebildeten Seiten verbinden. Aus solche periphereren Verstärkungsrippen 46 überspannen die Diagonalen 51 und wirken entsprechend einer Biegung entlang der Diagonalen entgegen. Fig. 7 illustriert auch den Abstand a in welchem die Verstärkungsrippen die Diagonalen 51 überspannen (in den Ausführungsformen von Fig. 5 und 6 entspricht der Abstand a der halben Länge der Diagonalen, da diese genau in ihrer Mitte überspannt werden).

Die Variante gemäss **Figur 8** unterscheidet sich von der Ausführungsform von Fig. 7 dadurch, dass die Verstärkungsrippen nach radial-aussen gebogen sind. Dadurch verringert sich zwar der versteifende Effekt ein wenig im Vergleich zu gerade verlaufenden, die Seiten verbindenden Rippen wie in Fig. 7 dargestellt. Die Verstärkungsrippen können aber ausreichend sein und haben den Vorteil, dass der zentrale Bereich der Deckelfläche 31, welcher nicht mit Rippen versehen ist, eine grössere radiale Ausdehnung hat, so dass solche Ausführungsformen auch dicht nebeneinander angeordnete Anstechdorne über fast die ganze Deckelfläche erlauben. Auch Fig. 8 illustriert den Abstand a, in welchem die Verstärkungsrippen die Diagonale überspannen.

**Figur 9****,** schliesslich, zeigt eine Ausführungsform mit einer einzigen, ringförmigen Verstärkungsrippe 46. Eine solche ist zwar nicht am Übergangsbereich befestigt. Durch die ringförmige Ausgestaltung ist sie aber in sich stabil. Sie eignet sich bspw. für Brühmodule, bei denen sowohl innerhalb als auch ausserhalb des durch die Verstärkungsrippe gebildeten Ringes je mindestens ein Anstechdorn vorhanden ist.

Auch Kombinationen der Konzepte der Figuren 5-9 sind denkbar. **Figur 10** skizziert zur Illustration und als eines von vielen möglichen Beispielen sehr schematisch eine mögliche Struktur von zusammenhängenden Verstärkungsrippen 46 mit entlang der Diagonale verlaufenden, jedoch nicht bis zum Zentrum reichenden Verstärkungsrippen und einer zentralen ringförmigen Verstärkungsrippe. Im Unterschied zur Ausführungsform von Fig. 5 erlaubt diese auch die Anordnung eines zentralen Anstechdorns. **Figur 11** skizziert eine Variante mit einer Kombination der Konzepte von Fig. 8 und 9. Auch andere Kombinationen sind möglich, ebenso wie noch andere Konzepte, bspw. mit hashtag-artig angeordneten Verstärkungsrippen, einer quadratischen Struktur anstelle der ringförmigen Verstärkungsrippe (oder zusätzlich dazu), unregelmässige Strukturen, etc.

## Patentansprüche

1. Mit einem Extraktionsgut gefüllte Portionenkapsel (1) für die Herstellung eines Brüherzeugnisses, aufweisend
- Einen Grundkörper (2) aus Kunststoff, mit einem Bodenbereich (5), einer umlaufenden Seitenwand (6) und einem zu einer Deckelseite hin an die umlaufende Seitenwand anschliessenden umlaufenden Grundkörper-Kragen (41); und
- einen Deckel (3) aus Kunststoff, mit einem umlaufenden Deckel-Kragen (42),
- wobei der Grundkörper (2) und der Deckel (3) im Bereich des Kragens (4) einen im Wesentlichen rechteckigen Grundriss haben,
- wobei der Deckel (3) und eine flache Deckelfläche (31) bildet, die gegenüber einer vom Deckel-Kragen (42) definierten Fläche versetzt angeordnet ist;
- wobei die Deckelfläche (31) ebenfalls einen rechteckigen Grundriss aufweist, so dass zwei Diagonalen (51) definiert sind;
- wobei eine Innenseite des Deckel-Kragens (42) am Grundkörper-Kragen befestigt ist, so dass sich ein gemeinsamer Kragen (4) ausbildet;
- und wobei der Grundkörper und der Deckel ein Kapselinneres mit dem Extraktionsgut umschliessen;
**dadurch gekennzeichnet, dass**
- dass der Deckel (3) eine Versteifungsstruktur mit mindestens einer zum Kapselinneren ragenden Verstärkungsrippe (46) aufweist, wobei die Versteifungsstruktur beide Diagonalen (51) überspannt.

2. Portionenkapsel nach Anspruch 1, wobei der Deckel (3) von radial-aussen nach radial-innen den Deckel-Kragen (42), einen gekrümmten Übergangsbereich (32) und die Deckelfläche (31) als mittigen, flachen Bereich aufweist.

3. Portionenkapsel nach Anspruch 2, wobei die Verstärkungsstruktur bis zum Übergangsbereich (32) verläuft und mit ihm verbunden ist.

4. Portionenkapsel nach Anspruch 3, wobei die Verstärkungsstruktur eine Mehrzahl von zwischen zwei Enden verlaufenden Verstärkungsrippen (46) aufweist, die je an beiden Enden mit dem Übergangsbereich verbunden sind und je eine Diagonale (51) überspannen.

5. Portionenkapsel nach einem der vorangehenden Ansprüche, wobei die Verstärkungsstruktur eine Mehrzahl von Verstärkungsrippen (46) aufweist, die von einem Rand der Deckelfläche (31) zur Mitte hin verlaufen, und die miteinander verbunden sind.

6. Portionenkapsel nach Anspruch 5, aufweisend zwei sich in der Mitte kreuzende, diagonal oder parallel zu Seiten der Deckelfläche (31) verlaufende Verstärkungsrippen (46).

7. Portionenkapsel nach einem der vorangehenden Ansprüche, aufweisend eine ringförmig um ein Zentrum der Deckelfläche (31) herum verlaufende Verstärkungsrippe (46).

8. Portionenkapsel nach einem der vorangehenden Ansprüche, wobei der Deckel (3) durch Spritzgiessen hergestellt ist.

9. Portionenkapsel nach einem der vorangehenden Ansprüche, wobei der Deckel (3) mit dem Grundkörper (2) verschweisst ist.

10. Herstellung einer Portionenkapsel nach einem der vorangehenden Ansprüche, aufweisend die Schritte:
• Herstellung des Grundkörpers durch ein formgebendes Verfahren;
• Herstellung des Deckels mittels Spritzgiessen, wobei die Giessform so ausgestaltet ist, dass sich nebst dem Deckel-Kragen (42), dem Übergangsbereich (32) und der Deckelfläche (31) auch die Verstärkungsstruktur ergibt;
• Befüllen des Grundkörpers mit dem Extraktionsgut;
• Befestigung des Deckels (3) am Grundkörper (2), so dass der Deckel-Kragen (42) mit den Grundkörper-Kragen (41) verbunden wird.
